# EUROPÄISCHE PATENTSCHRIFT

(11) **EP 2 154 400 B1**
(45) Veröffentlichungstag und Bekanntmachung des Hinweises auf die Patenterteilung: **07.09.2016**
(21) Anmeldenummer: 09009456.6
(22) Anmeldetag: 22.07.2009
(51) Int. Cl.: F16J 1/09, F16J 1/00, F02G 5/00, F01B 1/08, F01B 5/00, F01K 23/06

(54) **Hubkolbenexpansionsmaschine**
Reciprocating piston expansion machine
Machine à expansion avec piston

(30) Priorität: 04.08.2008 AT 12042008
(43) Veröffentlichungstag der Anmeldung: 17.02.2010
(73) Patentinhaber: MAN Truck & Bus Österreich AG, 4400 Steyr (AT)
(72) Erfinder: Raab, Gottfried, 4320 Perg (AT); Raup, Markus, 4800 Attnang-Puchheim (AT); Klammer, Josef, 4451 Garsten (AT); Kirchberger, Dr. Roland, 8052 Graz (AT); Lang, Michael, 8010 Graz (AT)

(56) Entgegenhaltungen:
- EP-A- 0 084 790
- EP-A- 1 870 575
- WO-A-2005/080836
- WO-A-2005/106233
- DE-A1- 2 652 177
- DE-A1- 3 429 727
- US-A- 5 327 987

## Beschreibung

Die Erfindung betrifft eine Hubkolbenexpansionsmaschine mit einem Kolben und einem Zylinder, insbesondere zum Einsatz in einem Dampfkreislauf eines an eine Brennkraftmaschine gekoppelten Wärmerückgewinnungskreislaufs. Der Kolben weist einen Kolbenkopf, einen Kolbenhals sowie einen Kolbenschaft auf, wobei der Kolbenkopf wenigstens eine in Umfangsrichtung verlaufende Nut aufweist, die geeignet ist, einen Kolbenring aufzunehmen, und wobei der Kolbenschaft über eine Aufnahme eines Kolbenbolzens sowie an seinem äußeren Umfang über eine Führungsfläche verfügt, die geeignet ist, den Kolben entlang einer Zylinderinnenwand zu führen. Ferner betrifft die Erfindung eine Verwendung einer Hubkolbenexpansionsmaschine in einer Antriebseinheit.

### Stand der Technik

Bei der Entwicklung bzw. Weiterentwicklung von Brennkraftmaschinen liegt in den letzten Jahren ein Hauptaugenmerk der Arbeiten einerseits auf einer Schadstoffminimierung und andererseits auf einer Effizienzsteigerung der Aggregate. In diesem Zusammenhang besteht eine Möglichkeit, die Effizienz moderner Brennkraftmaschinen zu steigern, darin, die im Bereich der jeweiligen Brennkraftmaschine anfallende Wärme optimal zu nutzen. Durch Vorsehen entsprechender Maßnahmen ist es möglich, sowohl die Baugröße der benötigten Kühlanlage zu begrenzen als auch die ansonsten lediglich an die Umgebung abgegebene Verlustwärme für weitere Anwendungen im Bereich des Kraftfahrzeugs nutzbar zu machen.

Um die im Bereich einer Verbrennungskraftmaschine anfallende Verlustwärme möglichst effektiv nutzen zu können, wird daher in zunehmendem Maße die Entwicklung von so genannten Wärmerückgewinnungssystemen forciert, innerhalb derer die an der Verbrennungskraftmaschine anfallende Wärme an ein Wärmeträgerfluid übertragen wird und mittels einer in diesem sekundären Wärmekreislauf befindlichen Dampfkraftmaschine nutzbar gemacht wird.

In diesem Zusammenhang ist aus der Druckschrift DE 34 29 727 A1 ein Brennkraft/Dampf-Verbundmotor mit Nutzung der Prozesswärme bekannt, bei dem die Minimierung des Kraftstoffverbrauchs vor allem dadurch erreicht werden soll, dass dem Verbrennungsmotor eine Dampfmaschine nachgeschaltet wird. Bei der in dieser Druckschrift als Verbundmotor bezeichneten Antriebseinheit wird ein Teil der in der Verbrennungskraftmaschine anfallenden Verlustwärme an das Kühlwasser übertragen, das auf diese Weise zum Sieden gebracht wird. Der durch das Sieden des Kühlwassers entstehende Dampf wird daraufhin in einem Dampfkessel unter Druck gespeichert und anschließend einer Dampfmaschine zur Verfügung gestellt. Das von der Dampfmaschine erzeugte Antriebsmoment wird auf die Kurbelwelle des Verbrennungsmotors übertragen.

Weiterhin wird in der EP 1 870 575 A2 eine aufgeladene Brennkraftmaschine eines Kraftfahrzeugs beschrieben, die einen Kühlkreislauf aufweist, in dem ein Arbeitsmittel umgewälzt wird, das zumindest teilweise in einen dampf- oder gasförmigen Aggregatzustand überführt wird. In diesem Fall ist eine Expandereinheit vorgesehen, die mit einer Abtriebswelle der Brennkraftmaschine über einen Triebstrang in Wirkverbindung steht. In der beschriebenen Expandereinheit wird durch eine Umwandlung der in dem zumindest teilweise dampf- oder gasförmigen Arbeitsmittel enthaltenen Energie eine Abtriebswelle der Expandereinheit bewegt. Die beschriebene Expandereinheit ist als Zweitaktkolbenmaschine ausgeführt, die mittelbar oder unmittelbar über den Triebstrang mit der Abtriebswelle der Brennkraftmaschine in Wirkverbindung steht.

Weiter ist aus der DE 26 52 177 A1 ein Kolben für Verbrennungskraftmaschinen mit mehreren ringförmigen Dichtungseinheiten bekannt, bei der der Kolben schaftseitig einen Ölraum zwischen sich und der Zylinderinnenwand ausbildet. Dieser Ölraum steht über mehrere Öffnungen, unter anderem über eine kolbenschaftseitige Öffnung, mit einem Innenraum in strömungstechnischer Verbindung, der zwischen einem Deckel und dem Kolbenschaft ausgebildet ist. In den Ölraum soll das Drucköl ein Ölpolster ausbilden.

Ausgehend von dem aus dem Stand der Technik bekannten technischen Lösungen, insbesondere also den bekannten Hubkolbenexpansionsmaschinen zur Nutzung der in einer Brennkraftmaschine anfallenden Verlustwärme mittels eines Dampfkreislaufes, liegt der Erfindung die Aufgabe zugrunde, eine Hubkolbenexpansionsmaschine anzugeben, mit der unter Zugrundelegung verhältnismäßig einfacher konstruktiver Mittel eine effektive Nutzung der in dem Dampf enthaltenen Energie und somit der in einer Brennkraftmaschine anfallenden Verlustwärme realisiert wird. Mit den anzugebenden technischen Lösungen sollen darüber hinaus vor allem ein sicherer Anlauf einer Dampf beaufschlagten Hubkolbenexpansionsmaschine sowie eine effektive Trennung der Öl- und Dampfkreisläufe verwirklicht werden. Durch eine Trennung der Öl- und Dampfkreisläufe soll eine gegenseitige Verunreinigung der Kreisläufe durch Übertreten des jeweiligen Mediums zuverlässig vermieden werden.

Die vorstehend genannte Aufgabe wird mit den Merkmalen des Anspruchs 1 gelöst, Vorteilhafte Ausführungsformen der Erfindung sind Gegenstand der Unteransprüche und werden unter Bezugnahme auf die Figuren in der Beschreibung näher erläutert.

Erfindungsgemäß ist vorgeschlagen, dass bei einer Hubkolbenexpansionsmaschine der Kolben derart ausgeführt ist, dass zwischen einer Wand des Zylinders und einer Außenfläche eines Kolbenhalses des Kolbens im Einbauzustand ein als Sammelraum für Blow-by-Gase geeigneter Hohlraum vorgesehen ist, wobei der Sammelraum mit einem Dampfkreislauf verbunden ist. Eine derartige technische Ausführung wird auf bevorzugte Weise dadurch erreicht, dass der Kolbenhals des innerhalb des Zylinders geführten Kolbens über einen geringeren Außendurchmesser als der Kolbenkopf und der Kolbenschaft verfügt. Dampfförmiges Fluid, das trotz des Vorsehens von Kolbenringen im Bereich des Kolbenkopfes aus den Dampf führenden Bereichen des Zylinderinnenraums, insbesondere also aus dem Expansionsraum in den Sammelraum gelangt, wird durch das Vorsehen eines entsprechend dimensionierten Sammelraums aufgefangen und hinreichend entspannt.

Ein Bestandteil einer erfindungsgemäß ausgeführten Hubkolbenexpansionsmaschine bildender Kolben zeichnet sich somit mit anderen Worten insbesondere dadurch aus, dass zusätzlich zu dem üblicherweise vorgesehenen Kolbenkopf, der auch als Kolbenringzone bezeichnet wird, und dem Kolbenschaft, ein Kolbenhals zwischen den beiden vorgenannten Bereichen vorgesehen ist, der den Kolbenkopf deutlich vom Kolbenschaft trennt. Die Trennung des Kolbenschaftes und des Kolbenkopfes erfolgt hierbei einerseits durch eine Beabstandung in Längsrichtung aufgrund des dazwischen befindlichen Kolbenhalses und andererseits durch das Vorsehen eines geringeren Außendurchmessers des Kolbenhalses.

In einer speziellen Ausführungsform der Erfindung sieht der Kolbenschaft in einem an den Kolbenhals angrenzenden Bereich eine in Umfangsrichtung des Kolbens verlaufende Nut vor, die zur Aufnahme einer Dichtung geeignet ist. Vorzugsweise ist die Dichtung als Stangendichtung ausgeführt. Eine derartige Stangendichtung sieht im Wesentlichen zwischen zwei an den jeweiligen Randbereichen der Nut angeordneten Dichtelementen einen Hohlraum vor, in dem sich Öl bzw. ölhaltige Rückstände aus dem Öl führenden Bereich des Zylinders sammeln kann. Mittels einer entsprechend ausgeführten Stangendichtung wird auf vorteilhafte Weise insbesondere verhindert, dass Öl oder ölhaltige Rückstände in den Bereich des Kolbenhalses und/oder in den Dampf führenden Bereich des Zylinders geleitet wird bzw. werden.

Vorteilhafterweise ist die Länge des Kolbenhalses, der in Bezug auf den Kolbenkopf und den Kolbenschaft über ein verringerten Außendurchmesser verfügt, derart ausgeführt, dass die Länge des Kolbenhalses zumindest nahezu dem Hub des Kolbens im Einbauzustand entspricht. Durch dieses konstruktive Merkmal des Kolbenhalses wird insbesondere sichergestellt, dass über die Kolbenringzone aus der Expansionszone des Zylinders entweichendes dampfförmiges Fluid bzw. Dampf sich im Bereich des Kolbenhalses ansammeln kann und sich vorzugsweise in dem entsprechenden Hohlraum entspannt. Darüber hinaus bietet diese Ausführungsform des Kolbenhalses eine Möglichkeit, die sich in dem Sammelraum, also dem Hohlraum zwischen Kolbenhals und Zylinderinnenwand, ansammelnden Blow-by-Gase, also insbesondere den Blow-by-Dampf über eine entsprechende Öffnung innerhalb der Zylinderinnenwand zu jedem Zeitpunkt während der Bewegung eines Kolbens aus dem Sammelraum abzusaugen. Derart abgesaugter Dampf kann auf besonders geeignete Weise erneut in den Dampfkreislauf eingeleitet werden und geht dem Gesamtsystem somit nicht verloren.

Eine weitere spezielle Ausgestaltung der Erfindung sieht vor, dass im Kolbenschaft des Kolbens wenigstens ein Leckagekanal vorgesehen ist, der eine fluiddurchströmbare Verbindung zwischen einem den Kolbenhals umgebenden Bereich und einem Bereich unterhalb des Kolbenschaftes bildet. In Bezug auf diesen wenigstens einen Leckagekanal ist es denkbar, diesen entweder als Bohrung innerhalb des Kolbenschaftes oder alternativ oder in Ergänzung hierzu als einseitig zur Zylinderinnenwand geöffneten Kanal auszuführen, der in die Oberfläche des Kolbenschaftes eingebracht ist und den Hohlraum innerhalb der Nut zwischen den beiden Dichtelementen der Stangendichtung mit dem Ölbereich verbindet.

Mit dem zuvor beschriebenen, wenigstens einen Leckagekanal wird auf besonders geeignete Weise sicher gestellt, dass Öl, das in die Nut innerhalb des Kolbenschaftes, in der eine Dichtung zur Abdichtung des Ölbereiches gegen den Sammelraum des Kolbenhalses vorgesehen ist, gelangt, zurück in den Ölbereich geleitet werden kann.

Die erfindungsgemäße Ausführung einer dampfbetriebenen Hubkolbenexpansionsmaschine stellt somit sicher, dass einerseits im Bereich des Kolbenkopfes eine Abdichtung gegen den mit Dampf gefüllten Expansionsbereich des Zylinders mit Hilfe von Kolbenringen erfolgt, dass weiterhin im Bereich des Kolbenschaftes eine Abdichtung gegenüber dem Ölbereich durch das Vorsehen einer entsprechenden Dichtung, vorzugsweise einer Stangendichtung erfolgt, und dass darüber hinaus im Bereich des Kolbenhalses, der sich in Längsrichtung des Kobens zwischen Kolbenkopf und Kolbenschaft befindet, ein Sammelraum vorgesehen ist, der im Einbauzustand des Kolbens einen Hohlraum zwischen der Außenwand des Kolbenhalses und der Zylinderinnenwand bildet. Durch die vorgenannten technischen Merkmale wird einerseits eine sichere Trennung der Dampf bzw. Öl führenden Bereich innerhalb des Zylinders erreicht und andererseits sicher gestellt, dass sich in dem den Kolbenhals umgebenden Sammelraum Blow-by-Dampf ansammeln kann, der schließlich auf zuverlässige Weise abgeführt und dem Dampfkreislauf zugeführt wird.

Die Führung eines Kolbens findet bevorzugt ölseitig statt, sodass die Schmierung zu jeder Zeit gewährleistet ist. Die Abdichtung der Ölseite erfolgt, wie bereits beschrieben, mit Hilfe entsprechender Dichtungen, vorzugsweise Stangendichtungen. Minimale Leckagen, die sich im Bereich dieser Dichtung ansammeln, werden über zumindest einen Leckagerückführkanal zur Unterseite des Kolbenschaftes bzw. des Kolbens und damit zurück auf die Ölseite geführt. Dem Kolbenschaft kommt darüber hinaus insbesondere die Aufgabe zu, Seitenkräfte aufzunehmen, die dadurch auftreten, dass der Kolben während seines Betriebs wechselseitig an die Zylinderwand gedrückt wird. Dies verursacht unter anderem Kolbenkippen und dadurch bedingte Geräusche. Diesem Kolbenkippen kann vorzugsweise durch eine Minimierung des Kolbenspiels und insbesondere eine Vergrößerung der Kolbenschaftlänge entgegen gewirkt werden. Eine weitere Maßnahme, die das Kolbenkippen verringert, besteht in der Desachsierung des Kolbenbolzens.

Die Erfindung betrifft somit eine Hubkolbenexpansionsmaschine, die bei der Nutzung von Verlustwärme von Brennkraftmaschinen zur Wirkungsgradsteigerung der Gesamtantriebseinheit eingesetzt wird.

Eine bevorzugte Hubkolbenexpansionsmaschine verfügt über wenigstens zwei Zylinder, deren Expansionsräume wenigstens teilweise und zumindest zeitweise mittels wenigstens eines Einlassventils mit einem Dampfkreislauf verbunden sind und in denen jeweils ein mit einer Kurbelwelle über eine Pleuelverbindung in Wirkverbindung stehender Kolben zwischen einem oberen und einem unteren Totpunkt bewegbar ist. Eine derartige Hubkolbenexpansionsmaschine zeichnet sich zudem dadurch aus, dass die Kurbelwelle derart ausgeführt ist, dass sobald sich wenigstens ein Zylinder im unteren Totpunkt befindet zumindest ein anderer Zylinder bereits nach dem oberen Totpunkt angeordnet ist. Durch die zuvor beschriebene Geometrie befindet sich jeweils ein Zylinder nach dem oberen Totpunkt, wenn der andere Zylinder im unteren Totpunkt steht. Eine derartige konstruktive Ausgestaltung stellt auf bevorzugte Weise sicher, dass eine umgekehrte Drehung, also ein Rückwärtslaufen der Hubkolbenexpansionsmaschine, verhindert wird.

In einer speziellen Ausführungsform verfügt die Hubkolbenexpansionsmaschine ausschließlich über zwei Zylinder, deren Mittenachsen in Einbaulage parallel und versetzt zueinander angeordnet sind. Eine derartige Anordnung der Zylinder und damit der in den Zylindern bewegten Kolben wird durch eine entsprechende Gestaltung des Kurbeltriebes realisiert.

Neben den konstruktiven Merkmalen eines besonderen Kolbens zeichnet sich eine erfindungsgemäße Hubkolbenexpansionsmaschine in vorteilhafter Weise dadurch aus, dass zusätzlich zu dem Einlassventil ein parallel dazu angeordnetes Bypassventil vorgesehen ist. Ein derartiges Bypassventil stellt auf vorteilhafte Weise sicher, dass ein regelungsfreier Selbstanlauf der Hubkolbenexpansionsmaschine in richtiger Richtung sichergestellt wird.

In Kombination mit dem Vorsehen eines Sammelraums in einem Bereich zwischen dem Kolbenhals und der Zylinderinnenwand ist im Bereich der Zylinderinnenwand bevorzugt eine Öffnung vorgesehen, durch die dampfförmiges Fluid, das sich im Sammelraum bildet auf bevorzugte Weise in einen Niederdruckbereich des Dampfkreislaufes abgeführt werden kann.

In einer besonderen Weiterbildung der erfindungsgemäßen Hubkolbenexpansionsmaschine ist die Öffnung innerhalb der Zylinderwand derart ausgeführt, dass sie sich trotz der Bewegung des Kolbens zwischen einem oberen und einem unteren Totpunkt zu jedem Zeitpunkt im Bereich des Sammelraums befindet. Die Länge des Kolbenhalses zwischen dem Kolbenkopf und dem Kolbenschaft ist in diesem Fall derart bemessen, dass die Kolbenhalslänge wenigstens dem Hub des Kolbens während des Betriebs der erfindungsgemäßen Hubkolbenexpansionsmaschine entspricht. Da der Sammelraum auf diese Weise mit dem Niederdruckbereich des Dampfkreislaufes verbunden ist, baut sich im Sammelraum kein Druck auf und das sich im Sammelraum bildende Blow-by-Gas bzw. das dampfförmige Fluid oder der Blow-by-Dampf kann problemlos wieder in den Dampfkreislauf zurückgeführt werden.

Die Erfindung zeichnet sich somit insbesondere dadurch aus, dass bei einer erfindungsgemäß ausgeführten Hubkolbenexpansionsmaschine ein Kolben verwendet wird, der in einem Bereich zwischen dem Kolbenkopf und dem Kolbenschaft über einen Kolbenhals verfügt, der im Vergleich zu Kolbenhals und Kolbenschaft über einen geringeren Außendurchmesser verfügt. Diese technische Ausführung eines Kolbens wird auf vorteilhafte Weise mit der Abdichtung im Bereich des Kolbenkopfes mittels wenigstens eines Kolbenrings und im Bereich des Kolbenschaftes mittels wenigstens einer Stangendichtung kombiniert. Auf diese Weise erfolgt eine sichere Trennung zwischen dem eigentlichen Arbeitsmedium, also einem dampfförmigen Fluid und dem für die Schmierung des Kolbens sowie der Kurbelwellen- und Pleuellager benötigten Öl. Es findet somit keine oder zumindest nur eine minimale gegenseitige Kontaminierung der Medien Öl und Dampf statt.

Im Folgenden wird die Erfindung unter Bezugnahme auf die Figuren ohne Beschränkung des allgemeinen Erfindungsgedankens näher erläutert. Es zeigen:
Fig. 1: Schnittdarstellung eines Kolbens mit samt zugeordnetem Zylinder;
Fig. 2: Außenansicht des Kolbens nach Fig. 1;
Fig. 3: Schemadarstellung der Kurbeltriebgeometrie einer erfindungsgemäß ausgeführten Hubkolbenexpansionsmaschine mit Kurbelwelle und zwei Zylindern.

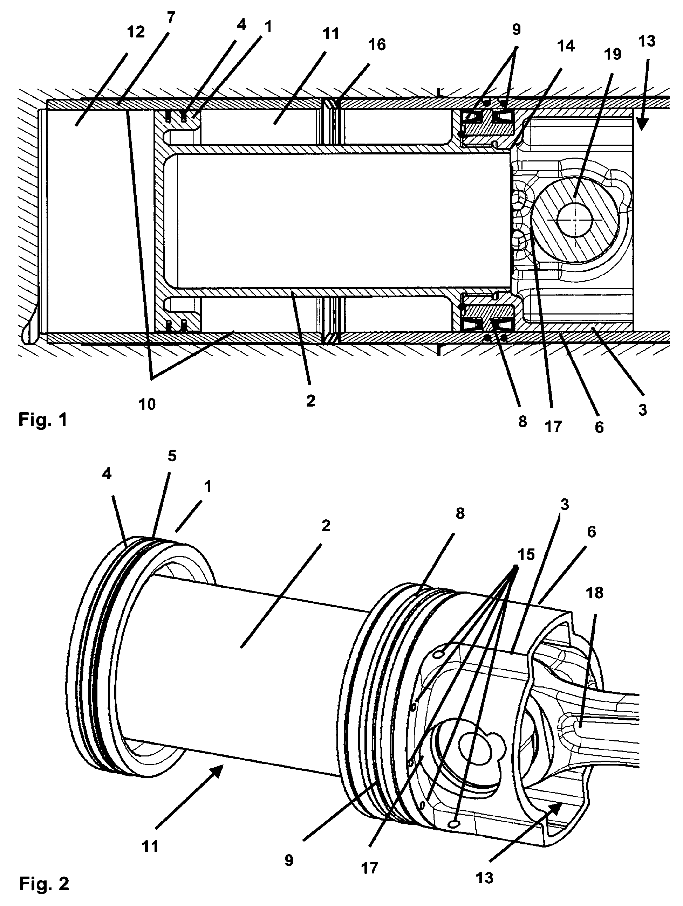

Fig. 1 zeigt einen Kolben mit einem Kolbenkopf 1, einem Kolbenhals 2 sowie einem Kolbenschaft 3. Der Kolbenkopf 1 verfügt über zwei in Umfangsrichtung verlaufende Nuten 4, die für die Aufnahme entsprechender Kolbenringe 5 geeignet ausgeführt sind. Demgegenüber weist der Kolbenschaft 3 eine Führungsfläche 6 auf mittels der der Kolben während des Betriebs innerhalb eines Zylinders 7 geführt wird. Weiterhin sind im oberen Bereich des Kolbenschaftes 3, in unmittelbarer Nähe des Kolbenhalses 2 zwei Nuten 8 vorgesehen, in denen sich als Stangendichtung 9 ausgeführte Dichtungen befinden.

Gegenüber dem Kolbenkopf 1 und dem Kolbenschaft 3 zeichnet sich der Kolbenhals 2 zum einen dadurch aus, dass er über einen verringerten Außendurchmesser verfügt und dass er in Längsrichtung des Kolbens eine räumliche Beabstandung des Kolbenkopfes 1 zum Kolbenschaft 3 sicherstellt. Sobald sich ein erfindungsgemäß ausgeführter Kolben in der Einbaulage innerhalb des Zylinders 7 befindet, wird zwischen dem Kolbenhals 2 und der Zylinderinnenwand 10 ein Hohlraum gebildet, der als Sammelraum 11 für dampfförmiges Fluid vorgesehen ist, das trotz des Vorsehens entsprechender Kolbenringe 5 aus dem dampfbeaufschlagten Expansionsraum 12 des Zylinders 7 als so genannter Blow-by-Dampf in diesen Sammelraum 11 gelangt.

Die Führung des Kolbens auf der Ölseite innerhalb eines Zylinders erfolgt mittels einer Führungsfläche 6, die zumindest einen Teil der Außenfläche des Kolbenschaftes 3 bildet. Diese Führungsfläche 6 nimmt insbesondere die auf den Kolben wirkenden Seitenkräfte auf.

Die innerhalb der Nuten 8 vorgesehenen Stangendichtungen 9 schließen zwischen den Dichtelementen, die eine Abdichtung gegenüber dem Öl führenden Bereich 13 des Zylinders 7 sicherstellen, ebenfalls einen in Umfangsrichtung des Kolbens verlaufenden Hohlraum 14 ein. Öl, das sich in diesem Hohlraum 14 zwischen den beiden Dichtelementen der Stangendichtung 9 ansammelt, wird über entsprechende Leckagerückführkanäle 15 aus diesem Hohlraum 14 in den Öl führenden Bereich 13 zurückgeleitet.

Darüber hinaus ist im Bereich des Sammelraums 11 eine Öffnung 16 in der Zylinderinnenwand 10 vorgesehen, die eine fluiddichte Verbindung zwischen dem Sammelraum 11 und einem Niederdruckbereich des Dampfkreislaufes (nicht dargestellt) herstellt. Hierbei ist die Öffnung 16 innerhalb der Zylinderinnenwand 10 derart ausgeführt bzw. die Länge des Kolbenhalses 2 derart dimensioniert, dass sich die Öffnung 16 zu jedem Zeitpunkt während der Bewegung des Kolbens zwischen dem oberen und dem unteren Totpunkt im Bereich des Sammelraums 11 befindet. Dampfförmiges Fluid, das trotz der Kolbenringe 5 in diesen Sammelraum 11 gelangt, wird entspannt und schließlich über die Öffnung 16 innerhalb der Zylinderinnenwand 10 in einen Niederdruckbereich des dampfkreislaufes geführt.

Die Kombination einer Abdichtung mittels Kolbenringen 5 im Bereich des Kolbenkopfes 1 sowie im Bereich des Kolbenschaftes 3 mit Hilfe einer Stangendichtung 9 mit einem Kolbenhals 2, in dessen Außenbereich ein Sammelraum 11 für Blow-by-Gas, insbesondere Dampf, gebildet wird, stellt sicher, dass keine oder nur eine minimale gegenseitige Kontaminierung von Öl und dem Arbeitsmedium Dampf erfolgt. Hierbei zeichnet sich die erfindungsgemäße technische Lösung vor allem dadurch aus, dass sie eine entsprechende Abdichtung mit Hilfe verhältnismäßig einfacher konstruktiver Elemente realisiert.

Fig. 2 zeigt den Kolben in einer räumlichen Außenansicht. Die Führung des Kolbens innerhalb des Zylinders 7 erfolgt durch die im Bereich des Kolbenschaftes 2 vorgesehene Führungsfläche 6. Weiterhin sind im Bereich des Kolbenschaftes 3 zwei Bolzennaben 17 vorgesehen, in denen die Pleuelstange 18 mit Hilfe eines entsprechenden Bolzens 19 befestigt wird. Sobald ein entsprechend ausgeführter Kolben innerhalb des Zylinders 7 durch Entspannen eines komprimierten Dampfes innerhalb des Expansionsraums 12 in eine lineare Bewegung versetzt wird, wird auch die Pleuelstange 18 in Bewegung versetzt. Die Linearbewegung des Kolbens wird über die Pleuelstange 18 auf eine Kurbelwelle 20 übertragen und auf diese Weise in eine Rotationsbewegung überführt. Die Kurbelwelle 20 der Hubkolbenexpansionmaschine 21 steht mittelbar, bspw. über eine Überholkupplung, oder unmittelbar in mechanischer Wirkverbindung mit der Kurbelwelle einer Brennkraftmaschine (nicht dargestellt).

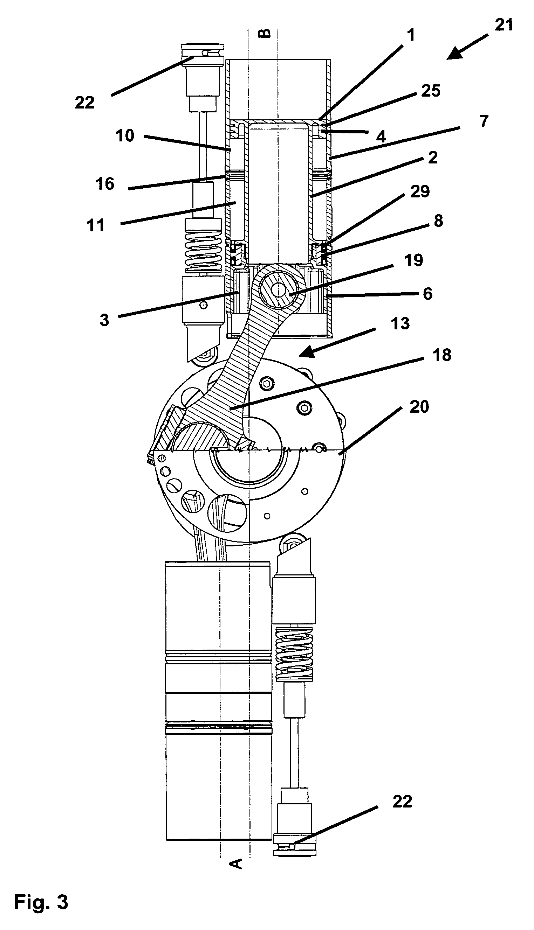

Fig. 3 zeigt eine erfindungsgemäß ausgeführte Hubkolbenexpansionsmaschine 21 mit zwei Zylindern 7. Weiterhin sind in dieser Darstellung schematisch zwei federbeaufschlagte Einlassventile 22 dargestellt, deren Bewegung ebenfalls durch die Rotation der Kurbelwelle 20 beeinflusst wird. Die Zylinder 7 und damit auch die in den Zylindern bewegbaren Kolben sind derart angeordnet, dass die Mittenachsen der Zylinder 7 zueinander parallel um den Abstand A = B gegeneinander versetzt verlaufen. Eine entsprechende Anordnung der Zylinder 7 zueinander wird durch eine entsprechende Realisierung einer Kurbeltriebgeometrie erreicht. Vorzugsweise beträgt der Versatz der Zylindermittenachsen zueinander 25 mm.

Aufgrund der in Fig. 3 dargestellten Geometrie wird sichergestellt, dass der links dargestellte Zylinder 7 nach dem oberen Totpunkt angeordnet ist, wenn sich der rechts abgebildete Zylinder im unteren Totpunkt befindet. Die gleiche Konfiguration tritt ein, sobald sich Kolben in der jeweils entgegengesetzten Endstellung befinden. Diese konstruktive Maßnahme stellt sicher, dass beim Einströmen von Dampf über ein zum Einlassventil eines Zylinders parallel angeordnetes Bypassventil den Kolben eines Zylinders in den unteren Totpunkt bewegt und dadurch das Einlassventil des jeweils anderen nach dem oberen Totpunkt befindlichen Zylinders geöffnet ist und bei Dampfbeaufschlagung die Hubkolbenexpansionsmaschine selbständig in die richtige Richtung anläuft. Zur Positionierung der Hubkolbenexpansionsmaschine 21 in einer der beiden Anlaufstellen ist in den Zylinderköpfen ein parallel zum Einlassventil angeordnetes Bypassventil vorgesehen, das eine Verbindung zwischen dem Expansionsraum 12 und der Dampfversorgung erstellt

In einer Warmlaufphase der erfindungsgemäß ausgeführten Hubkolbenexpansionsmaschine 21 werden das noch flüssige Arbeitsmedium oder der Nassdampf nicht über den Expansionsraum 12 des Zylinders 7 geleitet, sondern zunächst über Heizleitungen im Zylinderkopf mit einem nach geschalteten Drosselventil geführt. Auf diese Weise werden die Zylinder 7 zunächst erwärmt. Sobald ausreichend Wärme vorhanden ist und der Massestrom des Wärmeträgerfluids vollständig verdampft werden kann, steigt auch der Systemdruck innerhalb der Dampfversorgung an und es strömt schließlich Dampf über die Bypassventile in die erwärmten Expansionsräume 12 der Zylinder 7 ein. Jener Zylinder, der sich nicht in der Auslassphase befindet, wird in Richtung des unteren Totpunkts gedrückt. Auf diese Weise wird das Einlassventil des gegenüberliegenden Zylinders geöffnet und der Expander läuft bei Dampfbeaufschlagung selbsttätig an.

### Bezugszeichenliste

- 1: Kolbenkopf
- 2: Kolbenhals
- 3: Kolbenschaft
- 4: Nut im Kolbenkopf
- 5: Kolbenring
- 6: Führungsfläche
- 7: Zylinder
- 8: Nut im Kolbenschaft
- 9: Stangendichtung
- 10: Zylinderinnenwand
- 11: Sammelraum
- 12: Expansionsraum
- 13: Öl führender Bereich
- 14: Hohlraum
- 15: Leckagerückführkanal
- 16: Öffnung
- 17: Bolzennaben
- 18: Pleuelstange
- 19: Bolzen
- 20: Kurbelwelle
- 21: Hubkolbenexpansionsmaschine
- 22: Einlassventil

## Patentansprüche

1. Hubkolbenexpansionsmaschine mit einem Kolben und einem Zylinder (7), wobei der Kolben einen Kolbenkopf (1), einen Kolbenhals (2) sowie einen Kolbenschaft (3) aufweist, wobei der Kolbenkopf (1) wenigstens eine in Umfangsrichtung verlaufende Nut (4) aufweist, die geeignet ist, einen Kolbenring (5) aufzunehmen, und der Kolbenschaft (3) über eine Bolzennabe (17), die geeignet ist einen Kolbenbolzen aufzunehmen, und an seinem äußeren Umfang über eine Führungsfläche (6) verfügt, die geeignet ist, den Kolben entlang einer Zylinderinnenwand (10) zu führen, wobei ein Außendurchmesser des Kolbenhalses (2) kleiner als ein Außendurchmesser des Kolbenkopfes (1) und/oder des Kolbenschaftes (3) ist und der Kolben derart ausgeführt ist, dass zwischen der Zylinderinnenwand (10) und einer Außenfläche des Kolbenhalses (2) des Kolbens im Einbauzustand ein Hohlraum vorgesehen ist,
**dadurch gekennzeichnet,**
**dass** der Kolben mit Dampf beaufschlagt ist,
**dass** der Hohlraum ein Sammelraum (11) für Blow-by-Gase ist, und
**dass** der Sammelraum (11) mit einem Dampfkreislauf verbunden ist.

2. Hubkolbenexpansionsmaschine nach Anspruch 1,
**dadurch gekennzeichnet, dass** der Kolbenschaft (3) in einem an den Kolbenhals (2) angrenzenden Bereich über wenigstens eine in Umfangsrichtung des Kolbens verlaufende Nut (8) verfügt, die zur Aufnahme einer Dichtung (9) geeignet ist.

3. Hubkolbenexpansionsmaschine nach Anspruch 2,
**dadurch gekennzeichnet, dass** die Dichtung als Stangendichtung (9) ausgeführt ist.

4. Hubkolbenexpansionsmaschine nach einem der Ansprüche 1 bis 3,
**dadurch gekennzeichnet, dass** der Kolbenhals (2) eine Länge aufweist, die zumindest dem Hub des Kolbens im Einbauzustand entspricht.

5. Hubkolbenexpansionsmaschine nach einem der Ansprüche 1 bis 4,
**dadurch gekennzeichnet, dass** im Kolbenschaft (3) wenigstens ein Leckagerückführkanal (15) vorgesehen ist, der eine fluiddurchströmbare Verbindung zwischen der Nut (8), die in dem an den Kolbenhals (2) angrenzenden Bereich des Kolbenschaftes (3) in Umfangsrichtung des Kolbens verläuft und einem im Einbauzustand des Kolbens Öl führenden Bereich (13) unterhalb des Kolbenschaftes (3) bildet.

6. Hubkolbenexpansionsmaschine nach Anspruch 5,
**dadurch gekennzeichnet, dass** die Leckagerückführkanäle (15) als in Längsrichtung des Kolbens verlaufende Nuten ausgeführt sind, die in den Kolbenschaft (3) eingebracht sind.

7. Hubkolbenexpansionsmaschine nach Anspruch 5 oder 6,
**dadurch gekennzeichnet, dass** die Leckagerückführkanäle (15) als fluiddichte Bohrungen innerhalb des Kolbenschaftes (3) ausgeführt sind.

8. Hubkolbenexpansionsmaschine nach einem der Ansprüche 1 bis 7,
**dadurch gekennzeichnet, dass** wenigstens zwei Zylinder (7) vorgesehen sind, deren Expansionsräume (12) wenigstens teilweise und zumindest zeitweise mittels wenigstens eines Einlassventils (22) mit dem Dampfkreislauf verbunden sind und in denen jeweils ein mit einer Kurbelwelle (20) über eine Pleuelverbindung (18) in Wirkverbindung stehender Kolben zwischen einem oberen und einem unteren Totpunkt bewegbar ist, wobei die Kurbelwelle (20) derart ausgeführt ist, dass sobald sich wenigstens ein Zylinder (7a) im unteren Totpunkt befindet, zumindest ein anderer Zylinder (7b) bereits nach dem oberen Totpunkt angeordnet ist.

9. Hubkolbenexpansionsmaschine nach Anspruch 8,
**dadurch gekennzeichnet, dass** ein strömungstechnisch parallel zum Einlassventil angeordnetes Bypassventil vorgesehen ist.

10. Hubkolbenexpansionsmaschine nach Anspruch 8 oder 9,
**dadurch gekennzeichnet, dass** ausschließlich zwei Zylinder (7) vorgesehen sind, deren Mittenachsen in Einbaulage parallel und versetzt zu einander angeordnet sind.

11. Hubkolbenexpansionsmaschine nach Anspruch 8,
**dadurch gekennzeichnet, dass** der Sammelraum (11) mittels wenigstens eines im Kolbenkopf (1) vorgesehenen Kolbenrings (5) gegen einen Dampf führenden Expansionsraum (12) des Zylinders (7) abgedichtet ist.

12. Hubkolbenexpansionsmaschine nach Anspruch 8 oder 11,
**dadurch gekennzeichnet, dass** der Sammelraum (11) mittels wenigstens einer im Kolbenschaft (3) vorgesehenen Dichtung (9) gegen den Öl führenden Bereich (13) des Zylinderinnenraums abgedichtet ist.

13. Hubkolbenexpansionsmaschine nach Anspruch 12,
**dadurch gekennzeichnet, dass** die Dichtung als Stangendichtung (9) ausgeführt ist.

14. Hubkolbenexpansionsmaschine nach einem der Ansprüche 8 bis 13,
**dadurch gekennzeichnet, dass** die Zylinderinnenwand (10) im Bereich des Sammelraums (11) eine Öffnung (16) aufweist, mittels der wenigstens zeitweise eine Verbindung zwischen dem Sammelraum (11) und dem Dampfkreislauf herstellbar ist.

15. Hubkolbenexpansionsmaschine nach Anspruch 14,
**dadurch gekennzeichnet, dass** mittels der Öffnung (16) der Sammelraum (11) mit einem Niederdruckbereich des Dampfkreislaufs fluiddicht verbindbar ist.

16. Hubkolbenexpansionsmaschine nach Anspruch 14 oder 15,
**dadurch gekennzeichnet, dass** die Öffnung (16) derart in der Zylinderinnenwand (10) angeordnet ist, dass sich die Öffnung (16) bei einer Bewegung des Kolbens zwischen oberem und unterem Totpunkt stets im Bereich des Sammelraums (11) befindet.

17. Verwendung einer Hubkolbenexpansionsmaschine nach einem der Ansprüche 1 bis 16 in einer Antriebseinheit, in der in einer Verbrennungskraftmaschine anfallende Wärme an ein Wärmeträgerfluid übertragen, das Wärmeträgerfluid zumindest teilweise in einen dampfförmigen Aggregatzustand überführt wird, das zumindest teilweise dampförmige Wärmeträgerfluid in einer Hubkolbenexpansionsmaschine (21) der Antriebseinheit entspannt und das aufgrund der Entspannung auf eine Kurbelwelle (20) der Hubkolbenexpansionsmaschine (21) übertragene Drehmoment zumindest teilweise an eine Abtriebswelle der Antriebseinheit übertragen wird.

## Claims

1. A reciprocating piston expansion machine having a piston and a cylinder (7), the piston having a piston head (1), a piston neck (2) and a piston skirt (3), the piston head (1) having at least one groove (4) which runs in the circumferential direction and is suitable for receiving a piston ring (5), and the piston skirt (3) having a pin boss (17) which is suitable for receiving a gudgeon pin and, on its outer circumference, a guide face (6) which is suitable for guiding the piston along the cylinder inner wall (10), an external diameter of the piston neck (2) being smaller than an external diameter of the piston head (1) and/or of the piston skirt (3), and the piston being configured in such a way that a cavity is provided in the installed state between the cylinder inner wall (10) and an outer face of the piston neck (2) of the piston, **characterized in that** the piston is loaded with steam, **in that** the cavity is a collecting space (11) for blow-by gases, and **in that** the collecting space (11) is connected to a steam circuit.

2. The reciprocating piston expansion machine according to Claim 1, **characterized in that** the piston skirt (3) has, in a region which adjoins the piston neck (2), at least one groove (8) which runs in the circumferential direction of the piston and is suitable for receiving a seal (9).

3. The reciprocating piston expansion machine according to Claim 2, **characterized in that** the seal is configured as a rod seal.

4. The reciprocating piston expansion machine according to one of Claims 1 to 3, **characterized in that** the piston neck (2) has a length which corresponds at least to the stroke of the piston in the installed state.

5. The reciprocating piston expansion machine according to one of Claims 1 to 4, **characterized in that** at least one leakage return duct (15) is provided in the piston skirt (3), which leakage return duct (15) forms a connection, through which fluid can flow, between the groove (8) which runs in the circumferential direction of the piston **in that** region of the piston skirt (3) which adjoins the piston neck (2) and a region (13) below the piston skirt (3) which conducts oil in the installed state of the piston.

6. The reciprocating piston expansion machine according to Claim 5, **characterized in that** the leakage return ducts (15) are configured as grooves which run in the longitudinal direction of the piston and are made in the piston skirt (3).

7. The reciprocating piston expansion machine according to Claim 5 or 6, **characterized in that** the leakage return ducts (15) are configured as fluid-tight bores within the piston skirt (3).

8. The reciprocating piston expansion machine according to one of Claims 1 to 7, **characterized in that** at least two cylinders (7) are provided, the expansion spaces (12) of which are connected at least partially and at least temporarily by means of at least one inlet valve (22) to the steam circuit, and in which cylinders (7) in each case one piston which is operatively connected to a crankshaft (20) via a connecting rod connection (18) can be moved between a top and bottom dead centre, the crankshaft (20) being configured in such a way that, as soon as at least one cylinder (7a) is situated at the bottom dead centre, at least one other cylinder (7b) is already arranged after the top dead centre.

9. The reciprocating piston expansion machine according to Claim 8, **characterized in that** a bypass valve which is arranged parallel to the inlet valve in terms of flow is provided.

10. The reciprocating piston expansion machine according to Claim 8 or 9, **characterized in that** exclusively two cylinders (7) are provided, the centre axes of which are arranged parallel and offset with respect to one another in the installed position.

11. The reciprocating piston expansion machine according to Claim 8, **characterized in that** the collecting space (11) is sealed by means of at least one piston ring (5) which is provided in the piston head (1) with respect to a steam-conducting expansion space (12) of the cylinder (7).

12. The reciprocating piston expansion machine according to Claim 8 or 11, **characterized in that** the collecting space (11) is sealed by means of at least one seal (9) which is provided in the piston skirt (3) with respect to the oil-conducting region (13) of the cylinder interior space.

13. The reciprocating piston expansion machine according to Claim 12, **characterized in that** the seal is configured as a rod seal (9).

14. The reciprocating piston expansion machine according to one of Claims 8 to 13, **characterized in that**, in the region of the collecting space (11), the cylinder inner wall (10) has an opening (16), by means of which a connection between the collecting space (11) and the steam circuit can be established at least temporarily.

15. The reciprocating piston expansion machine according to Claim 14, **characterized in that** the collecting space (11) can be connected in a fluid-tight manner to a low pressure region of the steam circuit by means of the opening (16).

16. The reciprocating piston expansion machine according to Claim 14 or 15, **characterized in that** the opening (16) is arranged in the cylinder inner wall (10) in such a way that the opening (16) is always situated in the region of the collecting space (11) during a movement of the piston between the top and bottom dead centre.

17. The use of a reciprocating piston expansion machine according to one of Claims 1 to 16 in a drive unit, in which heat which accrues in an internal combustion engine is transferred to a heat exchange fluid, the heat exchange fluid is converted at least partially into a vaporous physical state, the at least partially vaporous heat exchange fluid is expanded in a reciprocating piston expansion machine (21) of the drive unit, and the torque which is transmitted to a crankshaft (20) of the reciprocating piston expansion machine (21) on account of the expansion is transmitted at least partially to an output shaft of the drive unit.

## Revendications

1. Machine à expansion à piston alternatif comprenant un piston et un cylindre (7), le piston présentant une tête de piston (1), un col de piston (2) ainsi qu'une tige de piston (3), la tête de piston (1) présentant au moins une rainure (4) s'étendant dans la direction périphérique, qui est prévue pour recevoir un segment de piston (5), et la tige de piston (3) disposant d'un moyeu d'axe (17) qui est prévu pour recevoir un axe de piston, et sur sa périphérie extérieure, d'une surface de guidage (6) qui est prévue pour guider le piston le long d'une paroi intérieure de cylindre (10), un diamètre extérieur du col de piston (2) étant inférieur à un diamètre extérieur de la tête de piston (1) et/ou de la tige de piston (3), et le piston étant réalisé de telle sorte qu'entre la paroi intérieure de cylindre (10) et une surface extérieure du col de piston (2) du piston soit prévue une cavité dans l'état installé, **caractérisée en ce que**
le piston est sollicité avec de la vapeur,
la cavité est un espace de collecte (11) pour les gaz contournant le piston, et
l'espace de collecte (11) est connecté à un circuit de vapeur.

2. Machine à expansion à piston alternatif selon la revendication 1,
**caractérisée en ce que** la tige de piston (3) dispose, dans une région adjacente au col de piston (2), d'au moins une rainure (8) s'étendant dans la direction périphérique du piston, laquelle est appropriée pour recevoir un joint d'étanchéité (9).

3. Machine à expansion à piston alternatif selon la revendication 2,
**caractérisée en ce que** le joint d'étanchéité est réalisé sous forme de joint d'étanchéité de tige (9).

4. Machine à expansion à piston alternatif selon l'une quelconque des revendications 1 à 3, **caractérisée en ce que** le col de piston (2) présente une longueur qui correspond au moins à la course du piston dans l'état installé.

5. Machine à expansion à piston alternatif selon l'une quelconque des revendications 1 à 4, **caractérisée en ce qu'**au moins un canal de retour de fuite (15) est prévu dans la tige de piston (3), lequel forme une connexion fluidique entre la rainure (8) qui s'étend dans la direction périphérique du piston dans la région de la tige de piston (3) adjacente au col de piston (2) et une région (13) conduisant de l'huile dans l'état installé du piston en dessous de la tige de piston (3).

6. Machine à expansion à piston alternatif selon la revendication 5,
**caractérisée en ce que** les canaux de retour de fuite (15) sont réalisés sous forme de rainures s'étendant dans la direction longitudinale du piston, lesquelles sont pratiquées dans la tige de piston (3).

7. Machine à expansion à piston alternatif selon la revendication 5 ou 6,
**caractérisée en ce que** les canaux de guidage de fuite (15) sont réalisés sous forme d'alésages étanches aux fluides à l'intérieur de la tige de piston (3).

8. Machine à expansion à piston alternatif selon l'une quelconque des revendications 1 à 7, **caractérisée en ce qu'**au moins deux cylindres (7) sont prévus, dont les espaces d'expansion (12) sont connectés au moins en partie et au moins temporairement au moyen d'au moins une soupape d'admission (22) au circuit de vapeur et dans lesquels à chaque fois un piston en liaison fonctionnelle avec un vilebrequin (20) par le biais d'une connexion à bielle (18) peut être déplacé entre un point mort haut et un point mort bas, le vilebrequin (20) étant réalisé de telle sorte que dès qu'au moins un cylindre (7a) se trouve au point mort bas, au moins un autre cylindre (7b) soit déjà disposé après le point mort haut.

9. Machine à expansion à piston alternatif selon la revendication 8,
**caractérisée en ce qu'**il est prévu une soupape de dérivation disposée parallèlement à la soupape d'admission par une technique d'écoulement.

10. Machine à expansion à piston alternatif selon la revendication 8 ou 9,
**caractérisée en ce que** deux cylindres (7) exclusivement sont prévus, dont les axes centraux sont disposés parallèlement dans la position d'installation et de manière décalée l'un par rapport à l'autre.

11. Machine à expansion à piston alternatif selon la revendication 8,
**caractérisée en ce que** l'espace de collecte (11) est étanchéifié au moyen d'au moins un segment de piston (5) prévu dans la tête de piston (1) vis-à-vis d'un espace d'expansion (12) du cylindre (7) guidant de la vapeur.

12. Machine à expansion à piston alternatif selon la revendication 8 ou 11,
**caractérisée en ce que** l'espace de collecte (11) est étanchéifié au moyen d'au moins un joint d'étanchéité (9) prévu dans la tige de piston (3) vis-à-vis de la région (13) guidant l'huile de l'espace intérieur du cylindre.

13. Machine à expansion à piston alternatif selon la revendication 12,
**caractérisée en ce que** le joint d'étanchéité est réalisé sous forme de joint d'étanchéité de tige (9).

14. Machine à expansion à piston alternatif selon l'une quelconque des revendications 8 à 13, **caractérisée en ce que** la paroi intérieure de cylindre (10) présente dans la région de l'espace de collecte (11) une ouverture (16) au moyen de laquelle une connexion entre l'espace de collecte (11) et le circuit de vapeur peut être établie au moins temporairement.

15. Machine à expansion à piston alternatif selon la revendication 14,
**caractérisée en ce qu'**au moyen de l'ouverture (16), l'espace de collecte (11) peut être connecté de manière étanche aux fluides à une région basse pression du circuit de vapeur.

16. Machine à expansion à piston alternatif selon la revendication 14 ou 15,
**caractérisé en ce que** l'ouverture (16) est disposée dans la paroi intérieure de cylindre (10) de telle sorte que l'ouverture (16) se trouve toujours dans la région de l'espace de collecte (11) lors d'un déplacement du piston entre le point mort haut et le point mort bas.

17. Utilisation d'une machine à expansion à piston alternatif selon l'une quelconque des revendications 1 à 16 dans une unité d'entraînement dans laquelle de la chaleur formée dans un moteur à combustion interne est transmise à un fluide caloporteur, le fluide caloporteur est transféré au moins en partie à l'état de vapeur, le fluide caloporteur au moins en partie sous forme de vapeur et détendu dans une machine à expansion à piston alternatif (21) de l'unité d'entraînement et le couple transmis du fait de la détente à un vilebrequin (20) de la machine à expansion à piston alternatif (21) est transmis au moins en partie à un arbre de prise de force de l'unité d'entraînement.
